# FASCICULE DE BREVET EUROPEEN

(11) **EP 3 587 210 B1**
(45) Date de publication et mention de la délivrance du brevet: **02.06.2021**
(21) Numéro de dépôt: 19183198.1
(22) Date de dépôt: 28.06.2019
(51) Int. Cl.: B61C 3/02, B61L 3/12, B61L 25/02, B60L 50/53, B61L 27/00

(54) **VÉHICULE, NOTAMMENT FERROVIAIRE, À DEUX SOURCES D'ALIMENTATION ÉLECTRIQUE**
FAHRZEUG, INSBESONDERE SCHIENENFAHRZEUG, MIT ZWEI STROMVERSORGUNGSQUELLEN
VEHICLE, IN PARTICULAR A RAILWAY VEHICLE, WITH TWO ELECTRIC POWER SUPPLY SOURCES

(30) Priorité: 29.06.2018 FR 1855995
(43) Date de publication de la demande: 01.01.2020
(73) Titulaire: ALSTOM Transport Technologies, 93400 Saint-Ouen (FR)
(72) Inventeur: MUSSET, Sébastien, 17220 SAINTE SOULLE (FR); DUBAN, Patrick, 17000 LA ROCHELLE (FR); VIENNE, Mathieu, 17000 LA ROCHELLE (FR); VIGUIER, Quentin, 13580 LA FARE DES OLIVIERS (FR)
(74) Mandataire: Lavoix

(56) Documents cités:
- WO-A1-2011/099193
- JP-A- 2007 295 640
- JP-B2- 5 372 545

## Description

La présente invention concerne un véhicule, de préférence ferroviaire, à deux sources d'alimentation électrique.

Un tel véhicule ferroviaire présente un premier mode de fonctionnement, dans lequel ses équipements électriques, notamment des moteurs électriques, sont alimentés par une première source d'alimentation électrique, et un second mode de fonctionnement, dans lequel ses équipements électriques sont alimentés par une seconde source d'alimentation électrique. Par exemple, la première source d'alimentation est une caténaire électrique, dont l'énergie électrique est captée à l'aide d'un organe de captation (par exemple un pantographe), et la seconde source d'alimentation est formée par des moyens de stockage d'énergie embarqués dans le véhicule ferroviaire.

Dans certains cas, le véhicule ferroviaire doit passer d'un mode de fonctionnement à l'autre, par exemple lors du passage d'une section de voie comprenant une caténaire à une section de voie dépourvue de caténaire.

JP 5 372545 B2 et JP 2007 295640 A décrivent des exemples connus de véhicules ferroviaires similaires à celui du préambule de la revendication 1.

La présente invention vise à optimiser le passage d'un mode de fonctionnement à l'autre, de manière dynamique et sans impact sur le confort et la traction.

A cet effet, l'invention a notamment pour objet un véhicule selon la revendication 1.

Un véhicule selon l'invention peut comporter l'une ou plusieurs des caractéristiques suivantes, prises seules ou selon toutes combinaisons techniquement envisageables :
- L'unité de contrôle est configurée pour, en cas de commande du passage des moyens de liaison du premier au deuxième modes de fonctionnement, successivement : commander la fermeture du second interrupteur puis l'ouverture du premier interrupteur, activer le second dispositif d'alimentation électrique, et commander l'ouverture du second interrupteur lorsque le courant électrique provenant du second dispositif d'alimentation est supérieur au courant électrique provenant de l'organe de captage.
- L'unité de contrôle est configurée pour, en cas passage des moyens de liaison du deuxième au premier modes de fonctionnement, successivement : commander le déplacement de l'organe de captage vers une position déployée, maintenir les premier et second interrupteurs en position ouverte à ce stade, commander la montée en tension des moyens de stockage sur un bus d'alimentation du véhicule, pour stocker transitoirement de l'énergie dans des filtres de traction, désactiver les moyens de stockage d'énergie, et commander la fermeture du premier interrupteur.

- L'unité de contrôle est configurée pour passer les moyens de liaison d'un mode de fonctionnement à l'autre après une temporisation définie au moyen d'un algorithme de calcul prédéfini, prenant en compte la vitesse du véhicule et le tracé de la voie.
- Le véhicule comprend des moyens de déplacement de chaque organe de captage entre une position déployée et une position rétractée, l'unité de contrôle étant configurée pour commander les moyens de déplacement de manière à déplacer chaque organe de captage en position rétractée lorsque les moyens de liaison passent dans le second mode de fonctionnement, et en position déployée lorsque les moyens de liaison passent dans le premier mode de fonctionnement.
- L'unité de contrôle est configurée pour commander les moyens de déplacement de manière à déplacer chaque organe de captage en position rétractée après le passage des moyens de liaison dans le second mode de fonctionnement et en position déployée dès le lancement de l'engagement des moyens de liaison du deuxième mode de fonctionnement vers le premier mode de fonctionnement.
- Le véhicule comprend deux antennes de réception de chaque premier signal, chaque antenne étant plus proche d'une extrémité respective du véhicule que l'autre.

L'invention concerne également un système de gestion de l'alimentation d'un véhicule, caractérisé en ce qu'il comporte un véhicule tel que défini précédemment, et une voie le long de laquelle circule le véhicule, la voie comprenant :
- au moins une première zone comprenant une source d'alimentation électrique ;
- au moins une seconde zone dépourvue de source d'alimentation électrique, et
- au moins une première balise agencée à proximité d'une jonction entre la première et la seconde zones, et propre à émettre l'au moins un premier signal à l'au moins une antenne de réception.

Avantageusement, la voie comporte au moins une seconde balise agencée entre la première balise et la seconde zone et propre à émettre au moins un deuxième signal de commande du déplacement de l'organe de captage en position rétractée et avantageusement également de l'arrêt du train.

L'invention sera mieux comprise à la lecture de la description qui va suivre, donnée uniquement à titre d'exemple et faite en se référant aux figures annexées, parmi lesquelles :
- la figure 1 est une vue schématique d'un système de gestion de l'alimentation électrique d'un véhicule ferroviaire selon un exemple de mode de réalisation de l'invention ;
- la figure 2 est une vue schématique de moyens de liaison électrique équipant le véhicule ferroviaire de la figure 1.

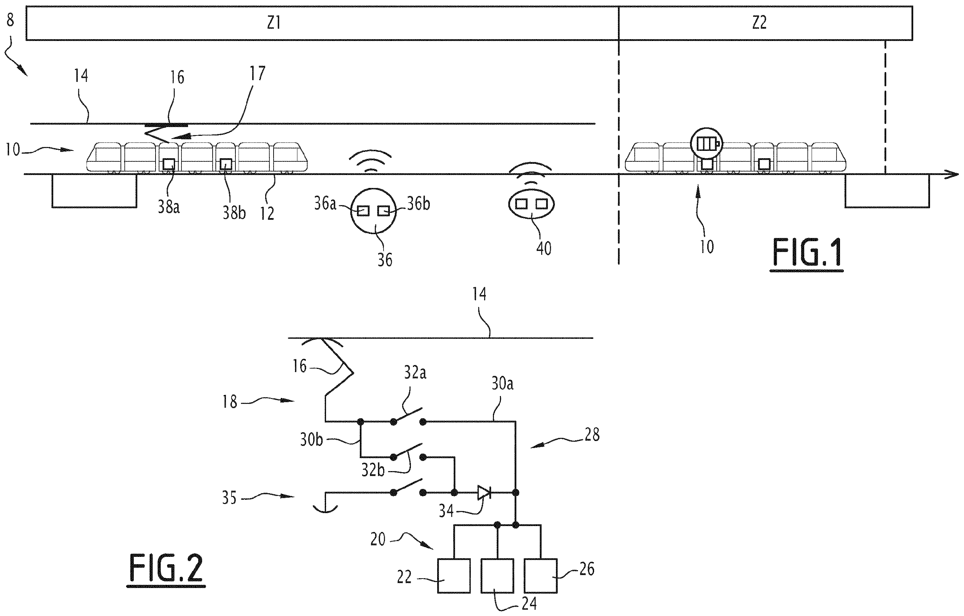

On a représenté, sur la figure 1, un système 8 de gestion de l'alimentation électrique dans un véhicule 10, de préférence un véhicule ferroviaire. Le véhicule ferroviaire 10 est par exemple un véhicule de transport urbain, notamment un tramway.

Le système de gestion 8 comporte le véhicule 10 et une voie 12, de préférence une voie ferrée 12 sur laquelle circule le véhicule 10.

La voie ferrée 12 comporte au moins une première zone Z1 comprenant une source d'alimentation électrique 14 pour le véhicule ferroviaire 10, notamment une caténaire 14, et au moins une seconde zone Z2 dépourvue de source d'alimentation électrique pour le véhicule ferroviaire 10.

Sur la figure 1, le véhicule ferroviaire 10 est représenté deux fois, plus particulièrement une fois dans la première zone Z1 et une fois dans la seconde zone Z2.

Le véhicule ferroviaire 10 comporte au moins un organe de captage 16, destiné à coopérer avec la source d'alimentation électrique 14. Par exemple, l'organe de captage 16 est un pantographe classique. Le véhicule ferroviaire 10 peut comporter plusieurs organes de captage 16, auquel cas ceux-ci sont identiques et traités de la même manière. On ne décrira donc ci-dessous qu'un organe de captage 16.

L'organe de captage 16 est mobile entre une position déployée (représentée sur le véhicule 10 dans la première zone Z1) et une position rétractée (représentée sur le véhicule 10 dans la seconde zone Z2).

A cet effet, le véhicule ferroviaire comporte des moyens de déplacement de l'organe de captage 16, propres à déplacer cet organe de captage 16 entre ses positions déployée et rétractée.

Plus généralement, le véhicule comporte une unité de contrôle 17 propre à contrôler le véhicule et notamment le déplacement de l'organe de captage c'est-à-dire les moyens de déplacement.

Le véhicule ferroviaire 10 comporte un premier dispositif 18 d'alimentation électrique comprenant l'organe de captage 16, et un second dispositif 20 d'alimentation électrique comprenant des moyens 22 de stockage d'énergie embarqués (représentés sur la figure 2).

Le véhicule ferroviaire 10 comporte par ailleurs au moins un équipement électrique, notamment un dispositif de traction 24 et au moins un équipement auxiliaire 26.

Le véhicule ferroviaire 10 comporte également des moyens 28 de liaison de chaque équipement électrique 24, 26 avec le premier dispositif d'alimentation 18 ou avec le second dispositif d'alimentation 20.

Les moyens de liaison 28 présentent un premier mode de fonctionnement dans lequel les moyens de liaison 28 connectent chaque équipement électrique 24, 26 avec le premier dispositif d'alimentation 18, et un second mode de fonctionnement dans lequel les moyens de liaison 28 connectent chaque équipement électrique 24, 26 avec le second dispositif d'alimentation 20.

Les moyens de liaison 28 comportent un circuit électrique reliant l'organe de captage 16 aux équipements électriques 24, 26. Ce circuit électrique comporte une première branche 30a comportant un premier interrupteur 32a, et une seconde branche 30b parallèle à la première branche 30a et comportant un second interrupteur 32b et une diode 34 comprenant une anode reliée à l'organe de captage 16 et une cathode reliée aux équipements électriques 24, 26.

L'unité de contrôle 17 est également propre à commander les moyens de liaison et notamment le passage du premier mode de fonctionnement au deuxième mode de fonctionnement et inversement.

Avantageusement, les moyens de liaison 28 comportent une troisième branche 35 en parallèle du second interrupteur 32b et en série avec la diode 34. Cette troisième branche 35 est destinée à être reliée à un autre organe de captation, par exemple utilisé pour une recharge rapide des moyens de stockage 22 lors de l'arrêt du véhicule 10 à une station de rechargement.

Les moyens de liaison 28 peuvent passer d'un mode de fonctionnement à l'autre, pour changer la source d'alimentation des équipements électriques 24, 26.

Le passage du premier mode de fonctionnement au second mode de fonctionnement est réalisé par les étapes suivantes :
- Dans le premier mode de fonctionnement, le courant électrique passe depuis l'organe de captage 16 jusqu'aux équipements électriques 24, 26, via la première branche 30a dont le premier interrupteur 32a est fermé. Le second interrupteur 32b est quant à lui en position ouverte.
- On ferme le second interrupteur 32b, puis on ouvre l'interrupteur 32a, et on active le second dispositif d'alimentation 20. Le courant électrique passe depuis l'organe de captage 16 jusqu'aux équipements électriques 24, 26, via la seconde branche 30b. Le courant électrique passe depuis le second dispositif d'alimentation 20 jusqu'aux équipements électriques 24, 26.
- Lorsque le courant électrique provenant du second dispositif d'alimentation 20 est supérieur au courant électrique provenant de l'organe de captage 16, on ouvre le second interrupteur 32b, pour se retrouver dans le second mode de fonctionnement.

Les équipements électriques sont alors alimentés par le second dispositif d'alimentation 20, et la consigne de tension est ramenée à un niveau nominal (par exemple 750V pour un tramway).

De préférence, l'unité de contrôle 17 est configurée pour déplacer chaque organe de captage 16 en position rétractée lorsque les moyens de liaison 28 passent dans le second mode de fonctionnement. Ce déplacement est réalisé après passage dans le second mode de fonctionnement.

On notera que la diode 34 n'est intégrée que via la branche parallèle 30b, de sorte qu'elle n'intervient pas en fonctionnement normal dans le premier mode de fonctionnement. Ainsi, il reste possible, dans le premier mode de fonctionnement, de faire passer du courant depuis les équipements électriques 24, 26 vers l'organe de captage 16, notamment au cours d'un freinage régénératif.

Le passage du second mode de fonctionnement vers le premier mode de fonctionnement est réalisé par les étapes suivantes :
- On déplace l'organe de captage 16 vers sa position déployée. Les interrupteurs 32a, 32b restent en position ouverte à ce stade.
- Demande de montée en tension du système de stockage sur le bus d'alimentation du véhicule, pour stocker transitoirement de l'énergie dans les filtres de traction (quelques 100 millisecondes).
- Arrêt du système de stockage d'énergie par arrêt de la régulation de tension (le système fonctionne pendant quelques millisecondes avec l'énergie présente dans les filtres de traction) le temps de fermer le premier interrupteur 32a.
- On se retrouve alors dans le premier mode de fonctionnement.

Le passage d'un mode de fonctionnement à l'autre est engagé automatiquement par l'unité de contrôle 17 en fonction du positionnement du véhicule ferroviaire 10 sur la voie ferrée 12.

A cet effet, la voie ferrée 12 comporte au moins une première balise 36, agencée à proximité de la jonction entre la première zone Z1 et la seconde zone Z2.

Avantageusement, la première balise 36 comporte deux premiers organes d'émission de signal 36a, 36b, dont l'un 36b est plus proche de la seconde zone Z2 que l'autre 36a. Chaque premier organe d'émission de signal 36a, 36b émet un premier signal distinct qui lui est propre.

Le véhicule ferroviaire 10 comporte de son côté au moins une antenne 38a, 38b de réception des premiers signaux émis par les premiers organes d'émission de signal 36a, 36b. Il est à noter que chaque antenne 38a, 38b est plus proche d'une extrémité respective du véhicule ferroviaire 10 que l'autre.

La première balise 36 et les antennes 38a, 38b présentent une structure similaire à celles utilisés dans le cadre d'un système de recharge stationnaire connu en soi. Le véhicule comporte ainsi un seul groupe d'antenne 38a, 38b pour les fonctions de positionnement du véhicule par rapport à des plots de recharge et de réception des premiers signaux.

L'unité de contrôle 17 est configurée pour engager le passage d'un mode de fonctionnement à l'autre lors de la réception des premiers signaux.

Avantageusement, l'engagement du passage d'un mode de fonctionnement à l'autre n'est pas instantané, mais le passage est réalisé après une temporisation définie au moyen d'un algorithme de calcul prédéfini, prenant en compte la vitesse du véhicule ferroviaire et le tracé de la voie. Ainsi, si le véhicule se déplace à une vitesse inférieure à une vitesse de service nominale, les moyens de liaison pourront rester dans le premier mode de fonctionnement plus longtemps, pour profiter au maximum de la première source d'énergie tant que le véhicule est dans la première zone Z1.

Le fait que la première balise 36 comporte deux premiers organes d'émission de signal 36a, 36b, et que le véhicule ferroviaire 10 comporte deux antennes 38a, 38b, permet de déterminer quel est le sens de circulation du véhicule ferroviaire 10, notamment s'il passe de la première zone Z1 à la seconde zone Z2 ou inversement. Ainsi, dans le premier cas, on initiera le passage du premier au second modes de fonctionnement, et dans le second cas, le passage du second au premier modes de fonctionnement.

De plus, l'utilisation des deux organes d'émission et des deux antennes, permet que lors de son passage au-dessus des organes d'émission, le véhicule et notamment son unité de contrôle vérifie la lecture en simultanée par ses deux antennes des codes émis par les 2 organes d'émission, afin de déclarer un défaut en cas non détection pour permettre une intervention de maintenance.

Avantageusement, la voie ferrée comporte également une seconde balise 40, agencée entre la première balise 36 et la seconde zone Z2. Cette seconde balise 40 est une balise de sécurité, émettant au moins un second signal à destination des antennes 38a, 38b et comportant de préférence deux organes d'émissions d'un deuxième signal propre. A la réception du second signal, il est vérifié si les organes de captage 16 sont en position rétractée. Si ce n'est pas le cas, le véhicule ferroviaire 10 est stoppé, le temps d'assurer le passage dans le second mode de fonctionnement et le déplacement des organes de captage 16 en position rétractée.

En revanche, si à la réception du second signal, les organes de captage 16 sont déjà en position rétractée, alors le véhicule ferroviaire 10 peut passer de la première zone à la seconde zone sans nécessiter un arrêt.

Il est à noter que la seconde balise 40 n'est utilisée que lors du passage de la première zone Z1 vers la seconde zone Z2. Ladite vérification n'est donc effectuée que lorsque le premier signal a été reçu avant le second signal, c'est-à-dire que le temps entre la réception du premier signal et du deuxième signal est inférieur à un seuil prédéterminé, par exemple de l'ordre de quelques secondes.

En variante, ladite vérification n'est effectuée que pour un sens de circulation du véhicule depuis la première zone Z1 vers la deuxième zone Z2, le sens de circulation étant de préférence déterminé grâce à l'utilisation des deux organes d'émission du deuxième signal et des deux antennes 38a, 38b.

Avantageusement, l'unité de contrôle 17 est propre à déterminer le sens de circulation du véhicule, de préférence en fonction d'un ordre de réception de signaux par l'antenne de réception.

La seconde balise 40 permet d'assurer que les organes de captage 16 sont bien en position rétractée lors du passage à la seconde zone Z2, afin d'assurer que le gabarit du véhicule ferroviaire 10 est adapté à la seconde zone Z2.

En outre, en cas de défaillance sur la première balise 36, la seconde balise 40 permet un arrêt du véhicule ferroviaire 10 pour un passage dans le second mode de fonctionnement.

## Revendications

1. Véhicule (10) destiné à circuler le long d'une voie (12), le véhicule (10) comportant :
- un premier dispositif d'alimentation électrique (18) comprenant au moins un organe de captage (16) destiné à coopérer avec une source d'alimentation électrique (14) équipant la voie (12),
- un second dispositif d'alimentation électrique (20) comprenant des moyens (22) de stockage d'énergie embarqués,
- au moins un équipement électrique (24, 26),
- des moyens (28) de liaison de chaque équipement électrique (24, 26) avec le premier dispositif d'alimentation (18) ou avec le second dispositif d'alimentation (20), les moyens de liaison (18) présentant un premier mode de fonctionnement dans lequel les moyens de liaison (18) connectent électriquement chaque équipement électrique (24, 26) avec le premier dispositif d'alimentation (18), et un second mode de fonctionnement dans lequel chaque équipement électrique (24, 26) est déconnecté électriquement du premier dispositif d'alimentation et les moyens de liaison (18) connectent électriquement chaque équipement électrique (24, 26) avec le second dispositif d'alimentation (20),
- une antenne (38a, 38b) de réception d'au moins un premier signal émis par une première balise (36) équipant la voie (12), et une unité de contrôle (17) configurée pour engager le passage des moyens de liaison (28) d'un mode de fonctionnement à l'autre lors de la réception de l'au moins un premier signal,
**caractérisé**
**en ce que** les moyens de liaison relient l'au moins un organe de captage (16) à l'au moins un équipement électrique (24, 26) via un circuit électrique comprenant :
- une première branche (30a) comportant un premier interrupteur (32a), et
- une seconde branche (30b), parallèle à la première branche (30a), et comportant un second interrupteur (32b) et une diode (34) comprenant une anode reliée à l'au moins un organe de captage (16) et une cathode reliée électriquement à l'au moins un équipement électrique (24, 26).

2. Véhicule (10) selon la revendication 1, dans lequel l'unité de contrôle (17) est configurée pour, en cas de commande du passage des moyens de liaison (28) du premier au deuxième modes de fonctionnement, successivement :
- commander la fermeture du second interrupteur (32b) puis l'ouverture du premier interrupteur (32a),
- activer le second dispositif (20) d'alimentation électrique,
- commander l'ouverture du second interrupteur (32b) lorsque le courant électrique provenant du second dispositif d'alimentation (20) est supérieur au courant électrique provenant de l'organe de captage (16).

3. Véhicule selon la revendication 1 ou 2, dans lequel l'unité de contrôle (17) est configurée pour, en cas passage des moyens de liaison (28) du deuxième au premier modes de fonctionnement, successivement :
- commander le déplacement de l'organe de captage (16) vers une position déployée,
- maintenir les premier et second interrupteurs (32a, 32b) en position ouverte à ce stade,
- commander la montée en tension du second dispositif d'alimentation électrique (20) sur un bus d'alimentation du véhicule, pour stocker transitoirement de l'énergie dans des filtres de traction,
- désactiver le second dispositif d'alimentation électrique (20), et
- commander la fermeture du premier interrupteur (32a).

4. Véhicule (10) selon l'une quelconque des revendications précédentes, dans lequel l'unité de contrôle (17) est configurée pour passer les moyens de liaison (28) d'un mode de fonctionnement à l'autre après une temporisation définie au moyen d'un algorithme de calcul prédéfini, prenant en compte la vitesse du véhicule (10) et le tracé de la voie (12).

5. Véhicule (10) selon l'une quelconque des revendications précédentes, comprenant des moyens de déplacement de chaque organe de captage (16) entre une position déployée et une position rétractée, l'unité de contrôle (17) étant configurée pour commander les moyens de déplacement de manière à déplacer chaque organe de captage (16) en position rétractée lorsque les moyens de liaison (28) passent dans le second mode de fonctionnement, et en position déployée lorsque les moyens de liaison (28) passent dans le premier mode de fonctionnement.

6. Véhicule (10) selon la revendication 5, dans lequel l'unité de contrôle (17) est configurée pour commander les moyens de déplacement de manière à déplacer chaque organe de captage (16) en position rétractée après le passage des moyens de liaison (28) dans le second mode de fonctionnement et en position déployée dès le lancement de l'engagement des moyens de liaison du deuxième mode de fonctionnement vers le premier mode de fonctionnement.

7. Véhicule (10) selon l'une quelconque des revendications précédentes, comportant deux antennes (38a, 38b) de réception de chaque premier signal, chaque antenne étant plus proche d'une extrémité respective du véhicule (10) que l'autre.

8. Système de gestion de l'alimentation d'un véhicule (10), **caractérisé en ce qu'**il comporte un véhicule (10) selon l'une quelconque des revendications précédentes, et une voie (12) le long de laquelle circule le véhicule (10), la voie (12) comprenant :
- au moins une première zone (Z1) comprenant une source d'alimentation électrique (14) ;
- au moins une seconde zone (Z2) dépourvue de source d'alimentation électrique, et
- au moins une première balise (36) agencée à proximité d'une jonction entre la première (Z1) et la seconde (Z2) zones, et propre à émettre l'au moins un premier signal à l'au moins une antenne de réception (38a, 38b).

9. Système de gestion selon la revendication 8, dans lequel la voie comporte au moins une seconde balise (40) agencée entre la première balise (36) et la seconde zone (Z2) et propre à émettre au moins un deuxième signal de commande du déplacement de l'organe de captage en position rétractée et avantageusement également de l'arrêt du train.

## Patentansprüche

1. Fahrzeug (10), welches dazu bestimmt ist, entlang einer Fahrspur (12) zu fahren, wobei das Fahrzeug (10) aufweist:
- eine erste Vorrichtung zur elektrischen Versorgung (18), welche zumindest ein Organ zur Entnahme (16) aufweist, welches dazu bestimmt ist, mit einer Quelle zur elektrischen Versorgung (14), welche die Fahrspur (12) ausstattet, zu kooperieren,
- eine zweite Vorrichtung zur elektrischen Versorgung (20), welche an Bord gebrachte Mittel (22) zur Speicherung von Energie aufweist,
- zumindest eine elektrische Ausstattung (24, 26),
- Mittel (28) zur Verbindung jeder elektrischen Ausstattung (24, 26) mit der ersten Vorrichtung zur Versorgung (18) oder mit der zweiten Vorrichtung zur Versorgung (20), wobei die Mittel zur Verbindung (18) einen ersten Betriebsmodus, in welchem die Mittel zur Verbindung (18) jede elektrische Ausstattung (24, 26) mit der ersten Vorrichtung zur Versorgung (18) elektrisch verbinden, und einen zweiten Betriebsmodus, in welchem jede elektrische Ausstattung (24, 26) von der ersten Vorrichtung zur Versorgung elektrisch getrennt ist und die Mittel zur Verbindung (18) jede elektrische Ausstattung (24, 26) mit der zweiten Vorrichtung zur Versorgung (20) elektrisch verbinden, haben,
- eine Antenne (38a, 38b) zum Empfangen von zumindest einem ersten Signal, welches von einer ersten Balise (36) gesendet wird, welche die Fahrspur (12) ausstattet, und eine Einheit zur Steuerung (17), welche eingerichtet, um den Übergang der Mittel zur Verbindung (28) von einem Betriebsmodus in den anderen beim Empfangen des zumindest einen ersten Signals einzuleiten,
**dadurch gekennzeichnet, dass** die Mittel zur Verbindung zumindest ein Organ zur Entnahme (16) mit zumindest einer elektrischen Ausstattung (24, 26) via einen elektrischen Schaltkreis verbinden, welcher aufweist:
- einen ersten Zweig (30a), welcher einen ersten Unterbrecher (32a) aufweist, und
- einen zweiten Zweig (30b), welcher parallel zum ersten Zweig (30a) ist, und welcher einen zweiten Unterbrecher (32b) sowie eine Diode (34) aufweist, welche eine Anode, welche mit dem zumindest einen Organ zur Entnahme (16) verbunden ist, und eine Kathode, welche mit der zumindest einen elektrischen Ausstattung (24, 26) elektrisch verbunden ist, aufweist.

2. Fahrzeug (10) gemäß Anspruch 1, wobei die Einheit zur Steuerung (17) eingerichtet ist, um, im Fall des Steuerns des Übergangs der Mittel zur Verbindung (28) vom ersten in den zweiten Betriebsmodus, der Reihe nach:
- das Schließen des zweiten Unterbrechers (32b) und dann das Öffnen des ersten Unterbrechers (32a) zu steuern,
- die zweite Vorrichtung (20) zur elektrischen Versorgung zu aktivieren,
- das Öffnen des zweiten Unterbrechers (32b) zu steuern, wenn der von der zweiten Vorrichtung zur Versorgung (20) stammende elektrische Strom größer ist als der vom Organ zur Entnahme (16) stammende elektrische Strom.

3. Fahrzeug (10) gemäß Anspruch 1 oder 2, wobei die Einheit zur Steuerung (17) eingerichtet ist, um, im Fall des Übergangs der Mittel zur Verbindung (28) vom zweiten in den ersten Betriebsmodus, der Reihe nach:
- das Bewegen des Organs zur Entnahme (16) in eine Ausgefahren-Position hin zu steuern,
- den ersten und den zweiten Unterbrecher (32a, 32b) zu diesem Zeitpunkt in der Offen-Position beizubehalten,
- den Spannungsanstieg der zweiten Vorrichtung zur elektrischen Versorgung (20) an einem Bus zur Versorgung des Fahrzeugs zu steuern, um übergangsweise Energie in Traktionsfiltern zu speichern,
- die zweite Vorrichtung zur elektrischen Versorgung (20) zu deaktivieren, und
- das Schließen des ersten Unterbrechers (32a) zu steuern.

4. Fahrzeug (10) gemäß irgendeinem der vorherigen Ansprüche, wobei die Einheit zur Steuerung (17) eingerichtet ist, um die Mittel zur Verbindung (28) von einem Betriebsmodus in den anderen nach einer Verzögerung übergehen zu lassen, welche mittels eines vordefinierten Algorithmus zur Berechnung definiert wird, welcher die Geschwindigkeit des Fahrzeugs (10) und den Streckenverlauf der Fahrspur (12) berücksichtigt.

5. Fahrzeug (10) gemäß irgendeinem der vorherigen Ansprüche, welches Mittel zum Bewegen jedes Organs zur Entnahme (16) zwischen einer Ausgefahren-Position und einer Eingefahren-Position aufweist, wobei die Einheit zur Steuerung (17) eingerichtet ist, um die Mittel zum Bewegen zu steuern, um jedes Organ zur Entnahme (16) in die Eingefahren-Position zu bewegen, wenn die Mittel zur Verbindung (28) in den zweiten Betriebsmodus übergehen, und in die Ausgefahren-Position zu bewegen, wenn die Mittel zur Verbindung (28) in den ersten Betriebsmodus übergehen.

6. Fahrzeug (10) gemäß Anspruch 5, wobei die Einheit zur Steuerung (17) eingerichtet ist, um die Mittel zum Bewegen zu steuern, um jedes Organ zur Entnahme (16) in die Eingefahren-Position zu bewegen nach dem Übergang der Mittel zur Verbindung (28) in den zweiten Betriebsmodus und in die Ausgefahren-Position zu bewegen vom Beginnen des Überführens der Mittel zur Verbindung vom zweiten Betriebsmodus in den ersten Betriebsmodus an.

7. Fahrzeug (10) gemäß irgendeinem der vorherigen Ansprüche, welches zwei Antennen (38a, 38b) zum Empfangen jedes ersten Signals aufweist, wobei jede Antenne einem jeweiligen Ende des Fahrzeugs (10) näher ist als die andere.

8. System zur Verwaltung der Versorgung eines Fahrzeugs (10), **dadurch gekennzeichnet, dass** es ein Fahrzeug (10) gemäß irgendeinem der vorherigen Ansprüche und eine Fahrspur (12), entlang welcher das Fahrzeug (10) fährt, aufweist, wobei die Fahrspur (12) aufweist:
- zumindest eine erste Zone (Z1), welche eine Quelle zur elektrischen Versorgung (14) aufweist,
- zumindest eine zweite Zone (Z2), welche frei von einer Quelle zur elektrischen Versorgung ist, und
- zumindest eine erste Balise (36), welche in der Nähe einer Verbindungsstelle zwischen der ersten (Z1) und der zweiten (Z2) Zone angeordnet ist, und welche imstande ist, zumindest ein erstes Signal zur zumindest einen Antenne zum Empfangen (38a, 38b) auszusenden.

9. System zur Verwaltung gemäß Anspruch 8, wobei die Fahrspur zumindest eine zweite Balise (40) aufweist, welche zwischen der ersten Balise (36) und der zweiten Zone (Z2) angeordnet ist, und welche imstande ist, zumindest ein zweites Signal zur Steuerung des Bewegens des Organs zur Entnahme in die Eingefahren-Position und vorteilhafterweise gleichermaßen des Anhaltens des Zugs auszusenden.

## Claims

1. Vehicle (10) intended to travel along a route (12), the vehicle (10) comprising:
- a first electrical supply device (18) comprising at least one sensing member (16) intended to cooperate with an electrical supply source (14) fitted on the route (12),
- a second electrical supply device (20) comprising means (22) for storing energy onboard,
- at least one item of electrical equipment (24, 26),
- means (28) for linking each item of electrical equipment (24, 26) with the first supply device (18) or with the second supply device (20), the linking means (18) having a first operating mode in which the linking means (18) connect each item of electrical equipment (24, 26) electrically with the first supply device (18), and a second operating mode in which each item of electrical equipment (24, 26) is disconnected electrically from the first supply device and the linking means (18) connect each item of electrical equipment (24, 26) electrically with the second supply device (20),
- an antenna (38a, 38b) for receiving at least one first signal emitted by a first beacon (36) fitted on the route (12), and a control unit (17) configured to engage the passage of the linking means (28) from one operating mode to the other during receipt of the at least one first signal,
**characterised in that** the linking means connect the at least one sensing member (16) to the at least one item of electrical equipment (24, 26) via an electrical circuit comprising:
- a first branch (30a) comprising a first switch (32a), and
- a second branch (30b), parallel to the first branch (30a), and comprising a second switch (32b) and a diode (34), comprising an anode connected to the at least sensing member (16) and a cathode connected electrically to the at least one item of electrical equipment (24, 26).

2. Vehicle (10) according to claim 1, in which the control unit (17) is configured, in the case of command to the linking means (28), to pass from the first to the second operating mode, successively:
- to command the closure of the second switch (32b) then the opening of the first switch (32a),
- to activate the second electrical supply device (20),
- to command the opening of the second switch (32b) when the electrical current coming from the second supply device (20) is greater than the electrical current coming from the sensing member (16).

3. Vehicle according to claim 1 of 2, in which the control unit (17) is configured, in the case of passage of the linking means (28) from the second to the first operating mode, successively:
- to command the displacement of the sensing member (16) to a deployed position,
- to maintain the first and second switches (32a, 32b) in the open position at this stage,
- to command the increase in voltage of the second electrical supply device (20) on a vehicle supply bus, in order to store energy temporarily in the traction filters,
- to deactivate the second electrical supply device (20), and
- to command the closure of the first switch (32a).

4. Vehicle (10) according to any of the preceding claims, in which the control unit (17) is configured to pass the linking means (28) from one operating mode to the other after a delay defined by means of a predefined calculation algorithm, taking into account the speed of the vehicle (10) and the path of the route (12).

5. Vehicle (10) according to any of the preceding claims, comprising means for displacing each sensing member (16) between a deployed position and a retracted position, the control unit (17) being configured to command the displacement means in order to displace each sensing member (16) into a retracted position when the linking means (28) pass into the second operating mode, and into a deployed position when the linking means (28) pass into the first operating mode.

6. Vehicle (10) according to claim 5, in which the control unit (17) is configured to command the displacement means in order to displace each sensing member (16) into a retracted position after passage of the linking means (28) into the second operating mode and into a deployed position as soon as launching of the engagement of the linking means from the second operating mode to the first operating mode.

7. Vehicle (10) according to any of the preceding claims, comprising two antennae (38a, 38b) for receiving each first signal, each antenna being nearer one respective end of the vehicle (10) than the other.

8. System for managing the supply of a vehicle (10), **characterised in that** it comprises a vehicle (10) according to any of the preceding claims, and a route (12) along which the vehicle (10) travels, the route (12) comprising:
- at least one first zone (Z1) comprising an electrical supply source (14);
- at least one second zone (Z2) not provided with an electrical supply source, and
- at least one first beacon (36) arranged in the vicinity of a junction between the first (Z1) and the second (Z2) zone, and able to emit the at least one first signal to the at least one receiving antenna (38a, 38b).

9. Managing system according to claim 8, in which the route comprises at least one second beacon (40) arranged between the first beacon (36) and the second zone (Z2) and able to emit at least one second signal for commanding the displacement of the sensing member into the retracted position and advantageously also stoppage of the train.
